# FASCICULE DE BREVET EUROPEEN

(11) **EP 0 850 154 B1**
(45) Date de publication et mention de la délivrance du brevet: **19.05.1999**
(21) Numéro de dépôt: 96929206.9
(22) Date de dépôt: 05.08.1996
(51) Int. Cl.: B60N 2/00

(54) **DISPOSITIF DE DETECTION POUR DES SIEGES DE VEHICULES**
DETEKTOR FÜR FAHRZEUGSITZE
DETECTING DEVICE FOR VEHICLE SEATS

(30) Priorité: 12.09.1995 LU 88655
(43) Date de publication de la demande: 01.07.1998
(73) Titulaire: I.E.E. International Electronics & Engineering S.à.r.l., L-2632 Luxembourg (LU)
(72) Inventeur: SCHOOS, Aloyse, L-8094 Bertrange (LU); SERBAN, Bogdan, L-4405 Soleuvre (LU)
(74) Mandataire: Meyers, Ernest
(86) Numéro de dépôt international: EP9603450
(87) Numéro de publication internationale: WO9710115

(56) Documents cités:
- DE-A- 4 212 018
- DE-C- 4 406 897
- US-A- 5 413 378

## Description

La présente invention concerne un dispositif de détection pour des sièges de véhicules sensible au poids d'une personne assise sur le siège et comprenant une série de capteurs de force dont la résistance électrique change en fonction de la force qu'ils subissent sous le poids de la personne, ces capteurs étant supportés par un substrat flexible incorporé dans le siège, les capteurs individuels étant branchés en parallèle entre deux conducteurs électriques pour former un réseau couvrant une surface sensible déterminée du siège.

Un dispositif de détection de ce genre est décrit dans le document DE-A-4 237 072 pour vérifier si un siège est occupé ou non et commander la mise hors service du système de protection par airbag afin de ne pas devoir remplacer l'airbag lorsque le véhicule est réparable après un choc qui a déclenché le déploiement de l'airbag. Ce dispositif utilise des capteurs de force du type FSR (Force Sensing Resistor) connus en soi dont la résistance diminue lorsqu'ils subissent une force perpendiculaire au substrat qui les supporte. Ce dispositif connu comporte une multitude de

capteurs individuels qui sont identiques entre eux du point de vue sensibilité et qui sont branchés en parallèle entre deux conducteurs électriques portés par des tensions différentes. Ce réseau suit un parcours sinueux dans le siège d'un occupant afin d'offrir la meilleure sensibilité et de se trouver en tous les points de la surface du siège pouvant subir l'influence du poids d'un occupant du siège.

Toutefois, du point de vue électrique, un tel réseau de capteurs individuels se comporte comme un seul capteur individuel, c'est-à-dire comme une résistance variable sous l'effet d'une force. Autrement dit, la résistance entre les bornes des deux conducteurs communs correspond approximativement à la résistance du capteur qui présente la résistance la plus faible, c'est-à-dire celui qui est soumis au poids le plus élevé. Le dispositif n'est toutefois pas en mesure de renseigner quel est ce capteur parmi tous les capteurs individuels du réseau. Ceci n'est pas non plus nécessaire dans l'application envisagée étant donné que le seul but du système de détection est de signaler un poids supérieur à un seuil déterminé afin de savoir si le siège dans lequel le dispositif est incorporé est occupé ou non.

Or, depuis la mise au point de ce dispositif de détection connu, les systèmes de protection par airbag ont été perfectionnés et peuvent être placés sous la commande d'un ordinateur, ce qui permet d'utiliser des systèmes d'airbags complexes pouvant comprendre plusieurs cartouches explosives ou plusieurs airbags individuels à déploiement différent. Il devient donc possible de moduler le déploiement d'un airbag ou d'adapter le déploiement aux zones à protéger pour garantir, ainsi, une sécurité accrue aux occupants. Pour profiter de toutes ces possibilités, il serait donc utile de disposer d'informations supplémentaires sur les occupants afin de permettre à l'ordinateur de commander l'airbag en conséquence et d'adapter son déploiement aux circonstances particulières.

Le document US-A-5,413,378 décrit un procédé et un dispositif pour contrôler le déploiement d'un airbag et qui utilise différents capteurs pour déterminer différents paramètres relatifs à l'occupant du siège. Le dispositif comporte des capteurs de poids qui permettent de déterminer dans quelle catégorie de poids l'occupant se trouve, tandis que des sondes ultrasoniques permettent de déterminer sa position.

Le but de la présente invention est de proposer un dispositif de détection du genre décrit dans le préambule de la revendication indépendante qui, non seulement permet la détection de l'occupation d'un siège, mais qui, en plus, permet de savoir à quelle catégorie de poids appartient l'occupant et/ou de connaître sa position sur le siège.

Pour atteindre cet objectif, la présente invention propose un dispositif de détection du genre décrit dans le préambule de la revendication indépendante qui est caractérisé par plusieurs réseaux de capteurs permettant de détecter autant de seuils différents de poids qu'il y a de réseaux et dans lequel l'un des conducteurs électriques d'un ou de plusieurs réseau/x est constitué par un potentiomètre permettant la création d'un gradient de potentiel de sorte que les capteurs individuels sont connectés à des tensions différentes suivant leur position et leur connexion au potentiomètre. Il est donc possible, par la mesure de la tension à l'autre conducteur du réseau, de localiser le centre géométrique de l'application de la force. Cette mesure permet donc de déterminer la position de la personne sur son siège ou éventuellement son inclinaison étant donné que celle-ci déplace le centre de gravité du champ de force le long du réseau respectif.

Selon un premier mode d'exécution, les capteurs individuels d'un même réseau déterminé sont sensiblement identiques entre eux mais les capteurs d'un réseau sont différents, du point de vue sensibilité, de ceux d'un autre réseau de sorte que les seuils de réponse des variations de résistance sont sensiblement les mêmes pour les différents réseaux. Autrement dit, à un seuil de résistance mesuré entre les bornes des différents réseaux correspond un poids déterminé qui est différent pour chacun des réseaux.

Selon un autre mode d'exécution, les seuils différents de poids correspondent à des seuils de résistance déterminés dans chacun des réseaux.

Aussi bien le premier que le second mode d'exécution permettent de déterminer la catégorie de poids de l'occupant du siège suivant le ou les réseau(x) dont la résistance tombe en-dessous d'un seuil déterminé et le ou les réseau(x) dont la résistance reste au-dessus de ce seuil.

Autrement dit, avec un arrangement relativement simple, les mêmes capteurs permettent de déterminer aussi bien la catégorie de poids de l'occupant que sa position et, éventuellement, son inclinaison.

Les deux conducteurs électriques de chaque réseau ou éventuellement seulement du réseau le plus sensible, sont reliés, en bout de ligne, par une diode pour permettre un contrôle du fonctionnement correct.

Les différents réseaux peuvent avoir des conducteurs électriques en commun pour réduire le nombre de connexions externes. Il est même possible de câbler tous les réseaux en matrice si leur nombre est suffisamment élevé.

D'autres particularités et caractéristiques de l'invention ressortiront de la description détaillée de quelques modes d'exécution avantageux présentés ci-dessous, à titre d'illustration, en référence aux dessins annexés dans lesquels :
- la Figure 1 représente un schéma d'un circuit de détection avec trois réseaux de capteurs et
- la Figure 2 représente un schéma d'un circuit avec deux réseaux permettant la localisation du centre de l'application.

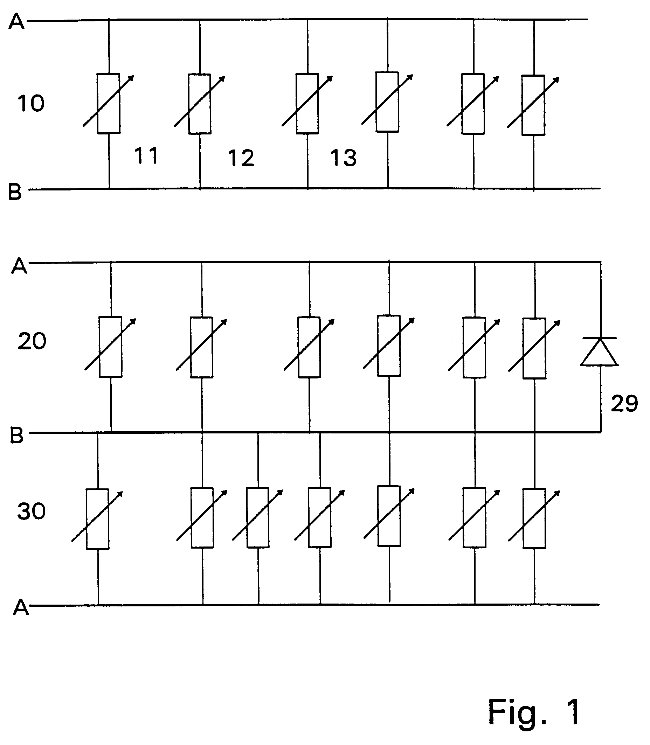

Le schéma de la Figure 1 montre à titre d'illustration trois réseaux différents de détection identifiés respectivement par les références 10, 20 et 30. Il faut toutefois souligner que le nombre de réseaux n'est pas limité à trois car les performances et les sensibilités du dispositif de détection seront d'autant plus grandes que le nombre de réseaux est élevé.

Chacun des réseaux 10, 20, 30 comporte, comme dans le document DE 4237072, une série de capteurs de force 10, 12, 13 etc, de préférence, mais pas nécessairement, du type FSR dont la résistance électrique diminue sous l'effet d'une force et qui sont branchés en parallèle entre deux conducteurs électriques A et B.

Le nombre de capteurs dans un réseau n'a pas d'importance étant donné que c'est le capteur qui subit la pression la plus élevée qui est déterminant pour la résistance entre les bornes A et B, peu importe la position de ce capteur dans le réseau.

Les différents réseaux sont supportés par un ou plusieurs substrat(s) flexible(s) non représenté(s) qui est (sont) incorporé(s) à un endroit approprié de la couverture ou du rembourrage du siège de manière à fournir la plus grande surface possible et à subir, en tous les points, l'influence du poids d'un occupant sans gêner le confort de celui-ci.

Les différents réseaux 10, 20, 30 etc sont conçus pour détecter différentes catégories de poids, par exemple un poids supérieur à 10 kg pour le réseau 10, un poids supérieur à 50 kg pour le réseau 20 et un poids supérieur à 100 kg pour le réseau 30.

A cet effet, les trois groupes de capteurs peuvent avoir des sensibilités différentes et être adaptés à des gammes de force spécifiques pour fournir aux bornes A et B un seuil de mesure de la résistance qui est le même pour les différents réseaux, c'est-à-dire qu'une résistance déterminée Rₛ aux bornes des trois réseaux 10, 20 et 30 correspond à des poids différents sur les trois réseaux. Autrement dit, dans le cas de l'exemple précité, si les résistances entre les bornes A et B des trois réseaux sont inférieures à Rₛ, cela signifie que le siège est occupé par une personne de poids supérieur à 100 kg. Si les résistances entre les bornes A et B des trois réseaux sont supérieures à Rₛ, cela signifie que le siège supporte un poids inférieur à 10 kg ou qu'il est inoccupé si l'on a fixé le critère d'occupation à 10 kg.

Si la résistance entre les bornes A et B des réseaux 10 et 20 est inférieure à Rₛ et que la résistance entre les bornes A et B du réseau 30 est supérieure à Rₛ, cela signifie que le siège est occupé par une personne dont le poids se situe entre 50 et 100 kg.

Il est également possible de définir, pour les différents réseaux 10, 20 et 30, des seuils de résistance Rₛ₁₀, Rₛ₂₀ et Rₛ₃₀ différents correspondant respectivement aux poids de 10 kg, 50 kg et 100 kg, l'interprétation des résultats restant la même.

Une autre possibilité consiste à utiliser, pour les trois réseaux, des capteurs qui présentent une réponse optimale dans leurs plages de mesure respectives. Ainsi, dans la plage de mesure respective, N seuils de poids correspondant à N seuils de résistance entre les deux bornes A et B peuvent être définis pour chaque réseau.

En outre, dans un réseau donné, chaque capteur peut avoir une réponse adaptée à l'environnement proche afin de compenser les différences dans les propriétés mécaniques des matériaux qui transmettent les forces aux capteurs individuels.

Pour réduire le nombre de connexions extérieures, il est possible, comme représenté, à titre d'exemple, pour les réseaux 20 et 30, de prévoir un conducteur commun B pour deux réseaux différents 20 et 30. Il est même possible de câbler tous les réseaux en une grille ou matrice lorsque leur nombre est élevé.

A la fin des réseaux, il est possible de prévoir, entre les conducteurs A et B, une diode permettant de tester le bon fonctionnement des réseaux. Une telle diode a été représentée, à titre d'illustration, en 29 dans le réseau 20 mais il est bien entendu qu'elle peut équiper chacun des réseaux du dispositif. Une telle diode ne perturbe pas les mesures lorsqu'elle est orientée de manière à bloquer le courant entre les conducteurs pendant la mesure. En revanche, en inversant la polarité de la tension appliquée aux conducteurs A et B pour rendre la diode conductrice, on peut, par une mesure de la résistance en série, détecter une rupture dans la boucle des conducteurs.

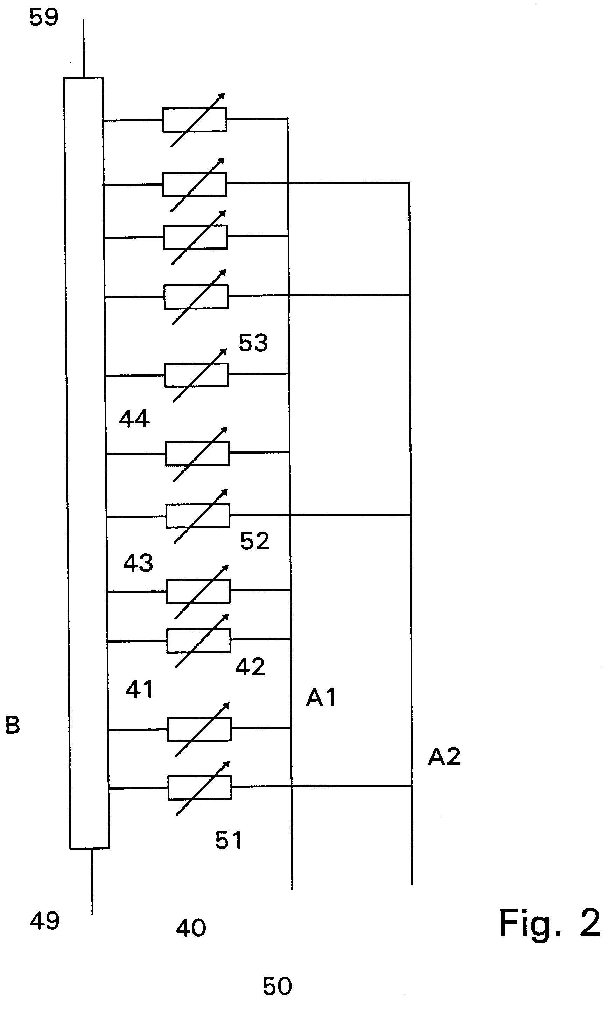

La Figure 2 montre un mode d'exécution avantageux qui permet, non seulement de déterminer différentes classes de poids, mais également la position, voire l'inclinaison d'un occupant sur son siège. On a représenté, à titre d'exemple, deux réseaux 40 et 50 comprenant chacun une série de capteurs 41, 42, 43, 44 etc, respectivement 51, 52, 53 etc, branchés en parallèles, respectivement entre deux conducteurs séparés A1 et A2 et un conducteur commun B. Dans ce mode d'exécution, le conducteur B est, en fait, un potentiomètre diviseur de tension aux deux bornes 49 et 59 duquel on applique des tensions différentes de manière à créer un gradient de potentiel. Les différents capteurs de chacun des réseaux 40 et 50 sont donc branchés sur un potentiel qui est fonction de l'emplacement de leurs liaisons avec le potentiomètre.

La mesure des deux seuils de poids s'effectue de la même manière que dans le mode de réalisation de la Figure 1, vu que le potentiomètre a une résistance faible par rapport à celle des capteurs.

En outre, une mesure de la tension aux bornes A1 et A2 permet de déterminer l'endroit où s'exerce la force. En effet, si la tension à la borne 59 est supérieure à la tension à la borne 49, une mesure sur la borne A1 d'une tension qui est proche de la tension de la borne 49 permet de conclure que c'est la résistance du capteur inférieur 41 qui a une résistance plus faible que les autres et subit donc la force maximale et que c'est ce capteur qui se trouve au centre de gravité des forces résultant du poids d'un occupant du siège. De même, une tension proche de la tension de la borne 59 permet de conclure que ce sont surtout les capteurs du côté opposé qui subissent le poids d'une personne.

On peut, de cette manière, déterminer avec suffisamment de précision l'endroit, le long d'un réseau, du centre de gravité des forces, donc la position de l'occupant du siège par rapport au réseau concerné. En disposant les différents réseaux de manière appropriée dans le siège, on peut ainsi déterminer la position de la personne sur celui-ci. On peut également détecter une inclinaison éventuelle d'une personne sur son siège par un déplacement du centre de gravité des forces résultant de son poids.

Le dispositif de détection proposé par la présente invention permet, par conséquent, de fournir les signaux nécessaires à un ordinateur de commande d'un système de protection par airbags afin d'adapter le déploiement de ceux-ci au poids et à la position d'une personne afin d'accroître la sécurité de celle-ci et d'éviter des blessures inutiles.

Les dispositifs de détection proposés peuvent être distribués dans le coussin et dans le dos d'un siège pour détecter, non seulement la position d'une personne, mais également des variations de pressions sur le coussin et le dos du siège afin de détecter au mieux les mouvements de cette personne.

Il reste finalement à noter que, si l'invention a été décrite, à titre d'exemple, en référence à des airbags, elle n'est nullement limitée à ce système de protection et peut être associée à d'autres systèmes connus ou à venir pour la protection de tous les occupants d'un véhicule, comme par exemple des tendeurs de la ceinture de sécurité qui sont également placés sous la commande de l'ordinateur. De plus, ces capteurs peuvent être associés à d'autres systèmes de détection pour avoir l'image la plus complète possible de la personne à protéger.

## Revendications

1. Dispositif de détection pour des sièges de véhicule sensible au poids d'une personne assise sur le siège et comprenant une série de capteurs de force (11, 12, 13) dont la résistance électrique change en fonction de la force qu'ils subissent sous le poids de cette personne, ces capteurs étant supportés par un substrat flexible incorporé dans le siège, les capteurs individuels (11, 12, 13) étant branchés en parallèle entre deux conducteurs électriques A, B pour former un réseau couvrant une surface sensible déterminée du siège, caractérisée par plusieurs réseaux (10, 20, 30) (40,50) de capteurs permettant de détecter autant de seuils différents de poids qu'il y a de réseaux, et en ce que l'un des conducteurs électriques d'un ou de plusieurs réseau/x (40, 50) est constitué par un potentiomètre permettant la création d'un gradient de potentiel de sorte que les capteurs individuels sont connectés à des tensions différentes suivant leur position et leur connexion au potentiomètre.

2. Dispositif selon la revendication 1, caractérisé en ce que les capteurs individuels d'un réseau déterminé sont sensiblement identiques entre eux, mais que les capteurs d'un réseau sont différents, du point de vue sensibilité, des capteurs d'un autre réseau de sorte que les seuils de réponse Rₛ des variations de résistance sont sensiblement les mêmes pour les différents réseaux.

3. Dispositif selon la revendication 1, caractérisé en ce que les différents seuils de poids correspondent à des seuils de résistance déterminés dans chacun des réseaux (10, 20, 30).

4. Dispositif selon l'une quelconque des revendications 1 à 3, caractérisé en ce que les deux conducteurs électriques A, B de chaque réseau sont reliés en bout de ligne par une diode (29).

5. Dispositif selon l'une quelconque des revendications 1 à 4, caractérisé en ce que différents réseaux ont des conducteurs électriques en commun.

6. Dispositif selon la revendication 5, caractérisé en ce que tous les réseaux sont câblés en matrice.

7. Dispositif selon l'une quelconque des revendications 1 à 6, caractérisé en ce que les réseaux sont distribués dans le coussin et/ou le dos du siège du véhicule pour détecter la position d'un occupant par rapport à son siège.

## Claims

1. Detection device for vehicle seats which is sensitive to the weight of a person sitting on the seat and comprises a series of force sensors (11, 12, 13) whose electrical resistance changes as a function of the force which they experience under the weight of this person, these sensors being supported by a flexible substrate incorporated into the seat, the individual sensors (11, 12, 13) being connected up in parallel between two electrical conductors A, B to form a network covering a specified sensitive surface area of the seat, characterized by several networks (10, 20, 30) (40, 50) of sensors making it possible to detect as many different weight thresholds as there are networks, and in that one of the electrical conductors of one or more network(s) (40, 50) consists of a potentiometer allowing the creation of a potential gradient so that the individual sensors are connected to different voltages depending on their position and their connection to the potentiometer.

2. Device according to Claim 1, characterized in that the individual sensors of a specified network are substantially identical to one another, but that the sensors of one network are different, from the sensitivity point of view, from the sensors of another network so that the response thresholds Rₛ for the variations in resistance are substantially the same for the various networks.

3. Device according to Claim 1, characterized in that the various weight thresholds correspond to specified resistance thresholds in each of the networks (10, 20, 30).

4. Device according to any one of Claims 1 to 3, characterized in that the two electrical conductors A, B of each network are linked at the end of the line by a diode (29).

5. Device according to any one of Claims 1 to 4, characterized in that various networks have electrical conductors in common.

6. Device according to Claim 5, characterized in that all the networks are wired as a matrix.

7. Device according to any one of Claims 1 to 6, characterized in that the networks are distributed within the cushion and/or the back of the seat of the vehicle so as to detect the position of an occupant with respect to their seat.

## Patentansprüche

1. Detektor für Fahrzeugsitze, der empfindlich ist gegenüber dem Gewicht einer Person, die auf dem Sitz Platz genommen hat, und der eine Reihe von Kraftmeßwertgebern (11, 12, 13) umfaßt, deren elektrischer Widerstand sich in Funktion der Kraft ändert, welcher die Meßwertgeber infolge des Gewichtes dieser Person ausgesetzt sind, wobei diese Meßwertgeber getragen werden von einem flexiblen in den Sitz eingelassenen Substrat, wobei die einzelnen Meßwertgeber (11, 12, 13) parallel zwischen zwei elektrischen Leitern A, B geschaltet sind, um ein Netz zu bilden das eine bestimmte empfindliche Fläche des Sitzes überdeckt, gekennzeichnet durch mehrere Netze (10, 20, 30) (40, 50) von Meßwertgebern, die es erlauben so viele unterschiedliche Gewichtsschwellen zu erkennen wie es Netze gibt, und dadurch daß einer der elektrischen Leiter aus einem oder aus mehreren Netzen (40, 50) von einem Potentiometer gebildet wird, der die Bildung eines Spannungsgradienten erlaubt, so daß die einzelnen Meßwertgeber mit verschiedenen Spannungen verbunden sind, je nach deren Position und deren Verbindung zu dem Potentiometer.

2. Detektor gemäß Anspruch 1, dadurch gekennzeichnet, daß die einzelnen Meßwertgeber eines bestimmten Netzes unter sich im wesentlichen gleich sind, daß aber die Meßwertgeber eines Netzes, bezüglich ihrer Empfindlichkeit, verschieden sind von den Meßwertgebern eines anderen Netzes, so daß die Ansprechschwellen Rₛ der Schwankungen der Widerstände für die verschiedenen Netze im wesentlichen dieselben sind.

3. Detektor gemäß Anspruch 1, dadurch gekennzeichnet, daß die verschiedenen Gewichtsschwellen mit bestimmten Widerstandsschwellen in einem jeden der Netze (10, 20, 30) übereinstimmen.

4. Detektor gemäß irgendeinem der Ansprüche 1 bis 3, dadurch gekennzeichnet, daß die beiden elektrischen Leiter A und B eines jeden Netzes am Ende der Linie durch eine Diode (29) verbunden sind.

5. Detektor gemäß irgendeinem der Ansprüche 1 bis 4, dadurch gekennzeichnet, daß die verschiedenen Netze gemeinsame elektrische Leiter aufweisen.

6. Detektor gemäß Anspruch 5, dadurch gekennzeichnet, daß alle Netze zu einer Matrize verkabelt sind.

7. Detektor gemäß irgendeinem der Ansprüche 1 bis 6, dadurch gekennzeichnet, daß die Netze in der Polsterung und/oder in dem Rückenteil des Fahrzeugsitzes verteilt sind, um die Position eines Insassen in Bezug auf seinen Sitz zu erkennen.
